(19) Europäisches Patentamt
European Patent Office
Office européen des brevets

(11) EP 3 012 420 A1

(12) **EUROPÄISCHE PATENTANMELDUNG**

(43) Veröffentlichungstag:
27.04.2016 Patentblatt 2016/17

(51) Int Cl.:
*F01K 13/02* (2006.01)

(21) Anmeldenummer: 14190269.2

(22) Anmeldetag: 24.10.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: **Siemens Aktiengesellschaft**
80333 München (DE)

(72) Erfinder:
• **Heue, Matthias**
**44879 Bochum (DE)**
• **Zimmer, Gerta**
**45468 Mülheim an der Ruhr (DE)**

(54) **Verfahren und Steuereinrichtung zum Synchronsieren einer Turbine mit dem Stromnetz**

(57) Die Erfindung betrifft ein Verfahren zur Synchronisierung einer Turbine mit einem Wechselstromnetz mit einer Netzfrequenz (2), aufweisend folgende Schritte:
A) Beschleunigen der Turbine bis zu einer Frequenz (4) im Bereich der Netzfrequenz (2);
B) Erfassen eines Differenzwinkels zwischen Turbine und Wechselstromnetz;
C) Erfassen einer Differenzgeschwindigkeit zwischen Turbine und Wechselstromnetz;
D) Beschleunigen oder Verzögern der Turbine derart, dass die Turbine einer Solltrajektorie (5) folgt, wobei die Solltrajektorie (5) eine vorab errechnete Trajektorie ist, die in Abhängigkeit vom Differenzwinkel eine Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

Die Erfindung betrifft ebenfalls eine zugehörige Steuereinrichtung für eine Turbine.

FIG 1

EP 3 012 420 A1

**Beschreibung**

Die Erfindung betrifft ein Verfahren zur Synchronisierung einer Turbine mit einem Stromnetz und eine zugehörige Steuereinrichtung.

Bei der Stromerzeugung in Kraftwerken, in denen der erzeugte Strom in ein Stromnetz eingespeist wird, ist darauf zu achten, dass der Strom phasenrichtig eingespeist wird. In thermischen Kraftanlagen, in denen der Strom in von Turbinen angetriebenen Generatoren erzeugt wird, ist also die Turbine in eine zur Phase des Stromnetzes passende Winkellage zu bringen, damit der Strom eingespeist werden kann. Genau genommen kommt es selbstverständlich auf die Winkellage des Generatorrotors an. Da der Rotor des Generators im Regelfall fest mit dem Rotor der Turbine verbunden ist, wird vorliegend stets davon gesprochen, dass die Turbine synchronisiert werden muss, wenngleich es eigentlich um den Generator geht.

Im Stand der Technik ist es üblich die Turbine unabhängig von der Phasenlage des Stromnetzes auf Netzfrequenz zu bringen. Sodann wird die Turbine mit Hilfe eines sogenannten Synchronisiergeräts in die richtige Phasenlage gebracht. Dazu wird die Turbine solange leicht beschleunigt oder abgebremst, salopp kann man von einen Hin- und Herfahren sprechen, bis die Phasenlage passend ist.

Aufgabe der vorliegenden Erfindung ist es ein Verfahren zur verbesserten Synchronisierung einer Turbine mit einem Wechselstromnetz zu schaffen. Die Lösung dieser Aufgabe findet sich insbesondere in den unabhängigen Ansprüchen. Die Unteransprüche geben Ausführungsformen an. Weitere Einzelheiten sind der Beschreibung zu entnehmen.

Es wurde erkannt, dass ein Verfahren zur Synchronisierung einer Turbine mit einem Wechselstromnetz mit einer Netzfrequenz bereitzustellen ist, welches die folgenden Schritte aufweist.

In einem Schritt A) ist die Turbine bis zu einer Frequenz im Bereich der Netzfrequenz zu beschleunigen. Unter einer Frequenz im Bereich der Netzfrequenz ist im Allgemeinen eine Frequenz in einem Intervall von etwa 1 Hertz unterhalb der Netzfrequenz bis zu etwa 1 Hertz oberhalb der Netzfrequenz. Exakte Werte sind nicht sinnvoll. Entscheidend ist, dass der Unterschied zwischen Netzfrequenz und Turbinenfrequenz nicht mehr besonders hoch ist.

Als Schritt B) ist das Erfassen eines Differenzwinkels zwischen Turbine und Wechselstromnetz vorgesehen.

Als Schritt C) ist das Erfassen einer Differenzgeschwindigkeit zwischen Turbine und Wechselstromnetz vorgesehen. Anders ausgedrückt wird die Differenz zwischen der Turbinenfrequenz und der Netzfrequenz ermittelt.

Die Netzfrequenz könnte theoretisch als bekannt angenommen werden. Wegen Frequenzschwankungen ist es jedoch sinnvoll auch die Netzfrequenz zu erfassen. Selbiges gilt verständlicherweise noch mehr für die Phasenlage des Netzes.

Es versteht sich, dass der Schritt C) oft während Schritt A) durchzuführen ist, um zu wissen wann die Turbinenfrequenz den Bereich der Netzfrequenz erreicht hat. Da die Netzfrequenz, abgesehen von geringen Schwankungen, die bei Schritt A noch nicht bedeutsam sind, konstant ist, könnte bei Schritt A) noch auf die Erfassung der Differenzgeschwindigkeit verzichtet werden und bis in den Bereich der bekannten Netzfrequenz, in Deutschland beispielweise 50 Hertz, beschleunigt werden.

Für die Erfindung entscheidend ist der Schritt D), nämlich das Beschleunigen oder Verzögern der Turbine derart, dass die Turbine einer Solltrajektorie folgt. Die Solltrajektorie ist dabei eine vorab errechnete Trajektorie, die in Abhängigkeit vom Differenzwinkel eine Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

Bei der Solltrajektorie handelt es sich um eine mathematische Funktion, die angibt welchen Wert die Solldifferenzgeschwindigkeit in Abhängigkeit vom Differenzwinkel haben soll, damit bei übereinstimmender Geschwindigkeit von Turbine und Wechselstromnetz die für eine synchrone Einspeisung geeignete Zielwinkellage erreicht wird. Die Solltrajektorie hängt dabei ersichtlich von einer angestrebten Beschleunigung oder Verzögerung ab. Es versteht sich, dass beim Ausregeln auf die Solltrajektorie keine unnötigen mechanischen Belastungen, etwa durch zu starkes Abbremsen erfolgen sollen. Dabei ist es nicht erforderlich die Solltrajektorie für die jeweilige Anwendung jeweils neu auszuwählen.

Dadurch, dass die Turbine der Solltrajektorie folgt kann am Ende des Beschleunigens oder Verzögerns, das heißt bei Übereinstimmung von Turbinenfrequenz und Netzfrequenz sofort mit der Stromeinspeisung begonnen werden, da die erwünschte Winkellage erreicht ist. Auf diese Weise lässt sich die Zeit bis zum Beginn der Stromerzeugung reduzieren. Damit kann ein höherer wirtschaftlicher Ertrag erzielt werden. Ein besonders wichtiger Gesichtspunkt dabei ist, dass der Strom nach der Entscheidung das Kraftwerk anzufahren, mitunter zeitnah benötigt wird. In einem solchen Fall kann es für die Stabilität des Stromnetzes von entscheidender Bedeutung sein, dass schnell mit der Stromerzeugung begonnen wird. Dabei können wenige Minuten von hoher wirtschaftlicher Bedeutung sein. Im Stand der Technik werden, nachdem die Turbinenfrequenz in etwa der Netzfrequenz entspricht, für das Erreichen der richtigen Phasenlage noch zwei bis drei Minuten benötigt. Mit der vorliegenden Erfindung kann diese Zeit deutlich, mitunter auf wenige Sekunden, reduziert werden.

Da die Differenzgeschwindigkeit und der Differenzwinkel erfasst werden, werden mögliche Schwankungen der Netzfrequenz mit erfasst und berücksichtigt. Die Synchronisierung erfolgt also auch dann zuverlässig, wenn Schwankungen der Netzfrequenz auftreten.

In einer Ausführungsform der Erfindung ist vorgesehen, dass zum Beschleunigen oder Verzögern der Turbine derart, dass die Turbine einer Solltrajektorie folgt, folgende Schritte wiederholt vorgenommen werden:

Als Schritt E) ist die Ermittlung einer sich aus der Solltrajektorie bei einem erfassten Differenzwinkel ergebenden Solldifferenzgeschwindigkeit vorgesehen.

Im Schritt F) erfolgt ein Vergleich der Solldifferenzgeschwindigkeit mit der bei dem erfassten Differenzwinkel erfassten Differenzgeschwindigkeit.

Im Schritt G) erfolgt ein Beschleunigen oder Verzögern der Turbine derart, dass die Solldifferenzgeschwindigkeit zumindest näherungsweise erreicht wird.

Zur Klarstellung sei erwähnt, dass unter der "Differenzgeschwindigkeit" die messtechnisch erfasste Differenzgeschwindigkeit, also die messtechnisch erfasste Frequenzdifferenz zwischen Turbine und Netz ist. Demgegenüber ist die Solldifferenzgeschwindigkeit aus der Solltrajektorie abgelesen. Stets kann anstelle von der Differenzgeschwindigkeit auch von der Frequenzdifferenz gesprochen werden.

Man betrachte die Situation, in der die Turbine schneller ist als das Netz, also die Turbinenfrequenz höher ist als die Netzfrequenz und die Turbine verzögert werden muss. Dann gilt es bei einer Solldifferenzgeschwindigkeit oberhalb der messtechnisch erfassten Differenzgeschwindigkeit die Verzögerung der Turbine zu senken und bei einer Solldifferenzgeschwindigkeit unterhalb der Differenzgeschwindigkeit die Verzögerung der Turbine zu erhöhen.

Sofern die Turbinenfrequenz niedriger ist als die Netzfrequenz, gilt es bei einer Solldifferenzgeschwindigkeit oberhalb der Differenzgeschwindigkeit die Turbine schwächer zu beschleunigen und entsprechend bei einer Solldifferenzgeschwindigkeit unterhalb der Differenzgeschwindigkeit stärker zu beschleunigen.

Es ist auch denkbar, dass auch bei einer Turbinenfrequenz oberhalb der Netzfrequenz kurzzeitig die Turbine beschleunigt und bei einer Turbinenfrequenz unterhalb der Netzfrequenz kurzzeitig die Turbine verzögert wird, um der Solltrajektorie zu folgen. Im Regelfall wird dies jedoch nicht geschehen.

In einer wichtigen Ausführungsform werden die Schritte E), also Ermittlung einer sich aus der Solltrajektorie bei einem erfassten Differenzwinkel ergebenden Solldifferenzgeschwindigkeit, und der Schritt F), also Vergleich der Solldifferenzgeschwindigkeit mit der bei dem erfassten Differenzwinkel erfassten Differenzgeschwindigkeit kontinuierlich durchgeführt. Damit kann die nach Schritt G) erforderliche Beschleunigung oder Verzögerung kontinuierlich angepasst werden.

Man kann das Folgen der Solltrajektorie auch als einen Regelkreis ansehen, bei dem die Differenzgeschwindigkeit die Regelgröße ist und die Solldifferenzgeschwindigkeit die Führungsgröße ist.

In einer Ausführungsform ist die Solltrajektorie parabelförmig. Die Solltrajektorie wird also so gewählt, dass die ideal folgende Verzögerungsfunktion die Form einer Parabel hat. Das entspricht dann einem Verzögern mit linear abnehmender Verzögerung, beim Erreichen der richtigen Phasenlage ist die Verzögerung der Turbine gleich Null.

Dies hat sich als brauchbar erwiesen. Es wird hier von Verzögerungsfunktion und Verzögerung gesprochen; dabei wird angenommen, dass die Turbine zunächst bis zu einer Frequenz oberhalb der Netzfrequenz beschleunigt worden ist. Anderenfalls müsste von einer Beschleunigungsfunktion und von Beschleunigung gesprochen werden.

In einer Ausführungsform wird die Turbine zunächst bis zu einer Frequenz oberhalb der Netzfrequenz beschleunigt. Dieses Vorgehen hat sich in der Praxis bewährt. Dann gilt es wie bereits erwähnt die Turbine ausgehend von dieser Frequenz oberhalb der Netzfrequenz bis zur Netzfrequenz zu verzögern. Dabei ist zu beachten, dass es im Normalfall nicht gelingt, die Turbine genau bis zu einer Frequenz zu beschleunigen. Die Turbine wird zunächst noch weiter beschleunigen, es wird auch von überschwingen oder überschießen gesprochen. Erst nach diesem Überschwingen ist es sinnvoll die Turbine gemäß der Solltrajektorie abzubremsen. Soweit die Solltrajektorie ein Abbremsen vorsieht, kann auch von einer Sollabbremsfunktion gesprochen werden.

Im Interesse einer zügigen Synchronisierung ist eine Frequenz von etwa 0,25 Hz oberhalb der Netzfrequenz sehr geeignet. Damit ist einerseits die während des Abbremsens zu erreichende Geschwindigkeitsreduktion überschaubar. Andererseits ist eine hinreichende Differenz zwischen der Turbinenfrequenz und der Netzfrequenz gegeben.

In einer Ausführungsform wird berücksichtigt, dass bei einem mehrphasigen Netz mehrere Zielwinkellagen vorhanden sein können, wobei bevorzugt diejenige Zielwinkellage ausgewählt wird, die von dem Differenzwinkel, der bei Beginn der Ausregelung auf die Solltrajektorie vorliegt, am schnellsten erreicht wird. Dies dürfte im Allgemeinen die Zielwinkellage sein, bei der die Turbine am wenigsten relativ zum Netz verdreht werden muss.

Beim etwa in Deutschland vorhandenen Netz sind drei Phasen mit einer Phasendifferenz von 120° vorhanden. Entsprechend weist auch der Generator eine entsprechende Struktur auf, so dass eine Drehung um 120° wieder zu einer hinsichtlich der Phasenlage identischen Stellung führt. Insofern ist stets eine Mehrzahl von Zielwinkellagen möglich. Die erforderliche Verdrehung der Turbine relativ zur Phasenlage des Netzes beträgt beim oben geschilderten Fall mithin immer weniger als 120°.

In einer Ausführungsform benötigt das Beschleunigen oder Verzögern der Turbine, derart dass die Turbine der Solltrajektorie folgt, bis zum Erreichen der Zielwinkellage etwa 20 s. Damit kann ohne überzogene mechanische Belastung die Turbine in überschaubarer Zeit auf Netzfrequenz abgebremst oder beschleunigt werden.

Bei der oben beispielhaft genannten Sollhaltefrequenz von 0,25 Hz oberhalb der Netzfrequenz sind etwa 10 Sekunden anzusetzen, bis der Überschwinger aus der Beschleunigung abgeklungen ist. Zusammen mit der beispielhaften Zeit von 20 Sekunden zum Abbremsen der Turbine kann damit innerhalb von etwa 30 Sekunden mit der Stromerzeugung begonnen werden. Im Vergleich zu den im Stand der Technik üblichen 2 bis 3 Minuten ist dies eine deutliche Verbesserung.

Die Erfindung betrifft ebenfalls eine Steuereinrichtung für eine Turbine, die eingerichtet ist, eine Turbine nach dem oben geschilderten Verfahren zu steuern.

Anhand der Zeichnungen werden nachfolgend weitere Einzelheiten der Erfindung dargestellt.

Dabei zeigen

Figur 1 eine Darstellung der Turbinenfrequenz, der Netzfrequenz und der Solltrajektorie;

Figur 2 die Solltrajektorie, also den Sollverlauf der Differenz zwischen Netz- und Turbinenfrequenz beim Abbremsen abhängig von dem Differenzwinkel zwischen Turbine und Netz.

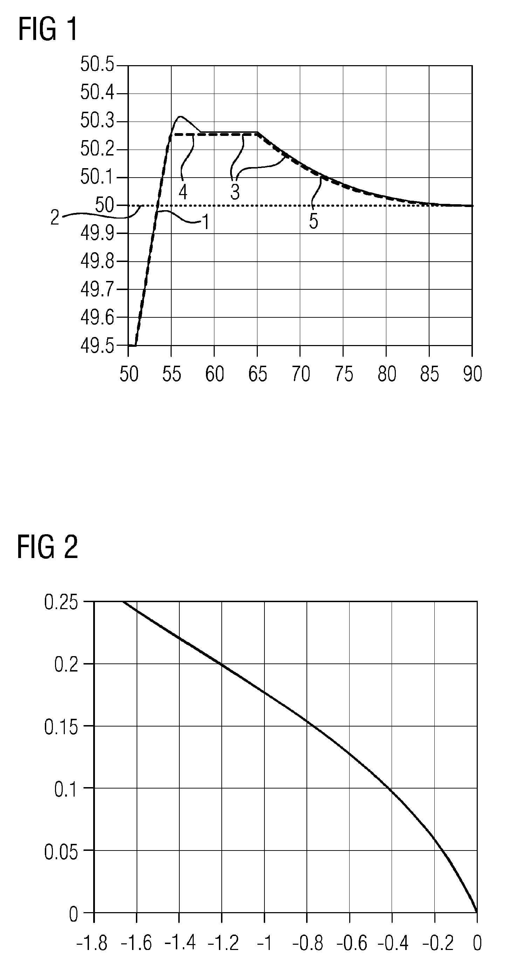

In Figur 1 wird exemplarisch der Zusammenhang zwischen Turbinenfrequenz 1, Netzfrequenz 2 und einer Sollfrequenz 3 dargestellt. Auf der Hochwertachse ist die Frequenz in Hertz aufgetragen, auf der Rechtswertachse die Zeit in Sekunden. Die als gepunktete Linie gezeigte Netzfrequenz 2 liegt bei 50 Hertz. Schwankungen der Netzfrequenz 2, die auftreten können, sollen hier außer Acht gelassen werden. Die durchgezogene Linie zeigt die Turbinenfrequenz 1. Die gestrichelte Linie zeigt den Verlauf der Sollfrequenz 3 für die Turbine. Wie am Verlauf der Turbinenfrequenz 1 ersichtlich, erfolgt beim Beschleunigen der Turbine auf 50,25 Hertz zunächst eine Beschleunigung über diesen Wert hinaus, also ein sogenanntes Überschwingen. Bevor mit einem geregelten Abbremsen der Turbine auf Netzfrequenz begonnen wird, soll das Überschwingen zunächst abgewartet werden.

Um dies anzuzeigen verläuft die Sollfrequenz 3 im Zeitraum beginnend bei 55 Sekunden und endend bei 75 Sekunden bei einer Frequenz von 50,25 Hertz als gerade Strecke 4.

Anschließend soll ein parabelförmiges Abbremsen erfolgen. Die Sollfrequenz 3 verläuft weiter als Solltrajektorie 5, welche als Sollabbremsfunktion ausgebildet ist. Die Sollfrequenz 3 setzt sich mithin aus der geraden Strecke 4 und der folgenden Sollabbremsfunktion 5 zusammen.

Bei der Sollabbremsfunktion 5 handelt es sich wie bereits dargestellt um einen mathematischen Zusammenhang, der angibt welche Differenzgeschwindigkeit zwischen Turbine und Netz, also welche Frequenzdifferenz zwischen Turbine und Netz, gegeben sein muss, damit bei übereinstimmender Frequenz von Turbine und Netz eine gewünschte Zielwinkellage erreicht wird.

Die Zielwinkellage ist diejenige Winkellage, die für die Synchronisierung erforderlich ist. Die Turbine muss die Netzfrequenz also bei diesem Winkel erreichen. Die Sollabbremsfunktion hat dabei die Aufgabe einen Zusammenhang zwischen Solldifferenz zwischen Netz- und Turbinenfrequenz und dem Differenzwinkel zwischen Turbine und Netz herzustellen. Zu beachten ist, dass bei einem dreiphasigen Netz, bei dem die einzelnen Phasen um 120° verschoben sind, drei um 120° versetzte Winkellagen für die Synchronisierung in Frage kommen. Als Zielwinkellage ist derjenige Winkel auszuwählen, die von dem Differenzwinkel, der bei Beginn der Ausregelung auf die Sollabbremsfunktion 5 vorliegt, am schnellsten erreicht wird.

In Figur 2 findet sich eine Darstellung der Sollabbremsfunktion 5. Auf der Hochwertachse ist die Differenzfrequenz in Hertz aufgetragen. Die Zahlenwerte geben die Solldifferenzgeschwindigkeit zum Netz wieder. Dabei wird der Zahlenbereich von 0 bis 0,25 Hertz gezeigt. Auf der Rechtswertachse ist der Differenzwinkel zwischen Turbine und Netz aufgetragen. Dabei ist am Ende des Abbremsens der Wert zu 0 gesetzt, das entspricht der Zielwinkellage Null, und die Werte davor als negative Werte angegeben. Es ist zu erkennen, dass während des Abbremsens ein nominaler Differenzwinkel von gut 1,6 Umdrehungen zurückgelegt werden wird.

Nun zurück zu Figur 1, aus der ersichtlich wird, dass nach der Beschleunigung auf 50,25 Hertz ein Überschwingen erfolgt. Der dort ablesbare Zahlenwert von 50,31 Hertz ist rein beispielhaft und im Grunde nicht angebracht, da das Überschwingen anlagenspezifisch ist.

Nach dem Überschwingen erfolgt das Abbremsen gemäß der Sollabbremsfunktion 5. Hierzu werden kontinuierlich der Differenzwinkel und die Differenzgeschwindigkeit erfasst. Die gemessene Differenzgeschwindigkeit wird mit der Solldifferenzgeschwindigkeit, die wie in Figur 2 gezeigt aus der Sollabbremsfunktion 5 für den jeweiligen Differenzwinkel abgelesen werden kann, verglichen. Die Verzögerung der Turbine wird sodann entsprechend laufend angepasst, so dass die Differenzgeschwindigkeit möglichst die Solldifferenzgeschwindigkeit erreicht.

Beim Zeitpunkt 85 Sekunden schließlich wird die Netzfrequenz 2 erreicht und die Turbine hat eine zum Stromnetz passende Winkellage, so dass eine phasenrichtige Stromerzeugung und Netzeinspeisung erfolgen kann. Es ist zu betonen, dass die 85 s hierbei beispielhaft sind. Der tatsächliche Wert hängt noch von der betrachteten Turbine und der gewählten Abbrems- oder Beschleunigungsfunktion ab

Abschließend sollen ein Zahlenbeispiel und zugehörige Rechnungen dargestellt werden.

Die Zeit sei t, der Zeitpunkt, bei dem die Turbinenfrequenz und die Netzfrequenz final übereinstimmen, sei $t_0$. Die Netzfrequenz betrage 50 Hertz. Das Abbremsen solle in 20 Sekunden gemäß einer parabelförmigen Sollabbremsfunktion erfolgen. Dann gilt für die Differenz zwischen Netz- und Turbinenfrequenz folgendes:

$$\Delta n(t) = \begin{cases} 0,25 & t < t_0 - 20 \\[2mm] \dfrac{0,25}{20^2}(t - t_0)^2 & t_0 - 20 \leq t < t_0 \\[4mm] 0 & t_0 \leq t \end{cases}$$

Der zugehörige nominale Differenzwinkel während des Abbremsens berechnet sich als Summe aus dem Differenzwinkel zum Beginn des Abbremsens und dem sich durch das Abbremsen ergebenden Differenzwinkel. Somit gilt:

$$\Delta\varphi(t) = \Delta\varphi(t_0 - 20) + \int_{t_0-20}^{t} \frac{0,25}{20^2}(\tau - t_0)^2 \, d\tau = \Delta\varphi(t_0 - 20) - \frac{0,25}{3*20^2}(-20)^3 + \frac{0,25}{3*20^2}(t - t_0)^3$$

Aus der Forderung

$$\Delta\varphi(t_0) = 0$$

folgt, dass

$$\Delta\varphi(t_0 - 20) = \frac{0,25}{3*20^2}(-20)^3 = -\frac{5}{3}$$

Hierbei ist zu beachten, dass der Differenzwinkel hier in Umdrehungszahlen angegeben ist, ein Wert von 1 entspricht mithin 360°.

Der Differenzwinkel lässt sich in Abhängigkeit der Differenz zwischen Netz- und Turbinengeschwindigkeit schreiben:

$$\Delta\varphi(\Delta n) = \frac{0,25}{3*20^2}\left(\frac{\Delta n * 20^2}{0,25}\right)^{3/2}$$

Ebenso ist die Differenz zwischen Netz- und Turbinengeschwindigkeit abhängig vom Differenzwinkel darstellbar.

$$\Delta n_{soll}(\Delta\varphi) = \frac{0,25}{20^2}\left(\frac{3*20^2*\Delta\varphi}{0,25}\right)^{2/3} = f(\Delta\varphi)$$

Die entsprechende Kurve kann in Figur 2 betrachtet werden.

Die obigen Überlegungen anhand einer parabelförmigen Sollabbremsfunktion sind auf andere Sollabbremsfunktionen übertragbar. Bisweilen mögen die Zusammenhänge nicht oder nur sehr schwer analytisch zu ermitteln sein. Eine numerische Lösung der obigen Gleichung oder eine Vorgabe von f($\Delta\varphi$) durch eine Kennlinie ist jedoch immer möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Synchronisierung einer Turbine mit einem Wechselstromnetz mit einer Netzfrequenz (2), aufweisend folgende Schritte:

   A) Beschleunigen der Turbine bis zu einer Frequenz (4) im Bereich der Netzfrequenz (2);
   B) Erfassen eines Differenzwinkels zwischen Turbine und Wechselstromnetz;
   C) Erfassen einer Differenzgeschwindigkeit zwischen Turbine und Wechselstromnetz;
   D) Beschleunigen oder Verzögern der Turbine derart, dass die Turbine einer Solltrajektorie (5) folgt, wobei die Solltrajektorie (5) eine vorab errechnete Trajektorie ist, die in Abhängigkeit vom Differenzwinkel die Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

2. Verfahren nach Anspruch 1,
   **dadurch gekennzeichnet, dass**
   zum Beschleunigen oder Verzögern der Turbine derart, dass die Turbine der Solltrajektorie (5) folgt, folgende Schritte wiederholt vorgenommen werden:

   E) Ermittlung einer sich aus der Solltrajektorie (5) bei einem erfassten Differenzwinkel ergebenden Solldifferenzgeschwindigkeit;
   F) Vergleich der Solldifferenzgeschwindigkeit mit der bei dem erfassten Differenzwinkel erfassten Differenzgeschwindigkeit;
   G) Beschleunigen oder Verzögern der Turbine derart, dass die Solldifferenzgeschwindigkeit zumindest näherungsweise erreicht wird.

3. Verfahren nach Anspruch 2,
   **dadurch gekennzeichnet, dass**
   die Schritte E) und F) kontinuierlich durchgeführt werden, um die nach Schritt G) erforderliche Beschleunigung oder Verzögerung kontinuierlich anzupassen.

4. Verfahren nach einem der vorhergehenden Ansprüche,
   **dadurch gekennzeichnet, dass**
   die Solltrajektorie (5) parabelförmig ist.

5. Verfahren nach einem der vorhergehenden Ansprüche,
   **dadurch gekennzeichnet, dass**
   die Turbine bis zu einer Frequenz oberhalb der Netzfrequenz (2) beschleunigt wird, insbesondere bis zu einer Frequenz von etwa 0,25 Hz oberhalb der Netzfrequenz (2).

6. Verfahren nach einem der vorhergehenden Ansprüche,
   **dadurch gekennzeichnet, dass**

berücsichtigt wird, dass bei einem mehrphasigen Netz mehrere Zielwinkellagen vorhanden sein können, wobei bevorzugt diejenige Zielwinkellage ausgewählt wird, die am schnellsten erreicht werden kann.

7. Verfahren nach einem der vorhergehenden Ansprüche,
**dadurch gekennzeichnet, dass**
das Beschleunigen oder Verzögern der Turbine, derart dass die Turbine der Solltrajektorie (5) folgt, bis zum Erreichen der Zielwinkellage etwa 20 s benötigt.

8. Steuereinrichtung für eine Turbine, die eingerichtet ist, eine Turbine nach einem Verfahren gemäß einem der vorhergehenden Ansprüche zu steuern.

## FIG 1

## FIG 2

Europäisches
Patentamt

European
Patent Office

Office européen
des brevets

**EUROPÄISCHER RECHERCHENBERICHT**

Nummer der Anmeldung

EP 14 19 0269

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 764 486 A1 (SIEMENS AG [DE]) 21. März 2007 (2007-03-21) * Absätze [0002] - [0004], [0015], [0016]; Abbildungen * ----- | 1,8 | INV. F01K13/02 |
| A | US 4 280 060 A (KURE-JENSEN JENS ET AL) 21. Juli 1981 (1981-07-21) * Spalte 15, Zeile 25 - Spalte 17, Zeile 13 * * Spalte 2, Zeile 25 - Spalte 3, Zeile 61; Abbildungen 1-5 * ----- | 1,8 | |
| A | US 2008/174122 A1 (NAKAMURA HAJIME [JP] ET AL) 24. Juli 2008 (2008-07-24) * Absätze [0023] - [0025]; Abbildungen * ----- | 1,8 | |
| A | EP 2 642 084 A1 (ALSTOM TECHNOLOGY LTD [CH]) 25. September 2013 (2013-09-25) * Absätze [0003] - [0013], [0028] - [0032]; Abbildungen 1-2 * ----- | 1,8 | |

RECHERCHIERTE
SACHGEBIETE (IPC)

F01K

Der vorliegende Recherchenbericht wurde für alle Patentansprüche erstellt

| Recherchenort | Abschlußdatum der Recherche | Prüfer |
|---|---|---|
| München | 7. Mai 2015 | Henkes, Roeland |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 19 0269

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2015

| Im Recherchenbericht angeführtes Patentdokument | Datum der Veröffentlichung | Mitglied(er) der Patentfamilie | | Datum der Veröffentlichung |
|---|---|---|---|---|
| EP 1764486 A1 | 21-03-2007 | CN | 101268252 A | 17-09-2008 |
| | | EP | 1764486 A1 | 21-03-2007 |
| | | EP | 1926889 A2 | 04-06-2008 |
| | | WO | 2007031535 A2 | 22-03-2007 |
| US 4280060 A | 21-07-1981 | CA | 1164073 A1 | 20-03-1984 |
| | | CH | 657185 A5 | 15-08-1986 |
| | | DE | 3122003 A1 | 11-03-1982 |
| | | ES | 8305458 A1 | 01-07-1983 |
| | | FR | 2484105 A1 | 11-12-1981 |
| | | IT | 1139360 B | 24-09-1986 |
| | | JP | S5728814 A | 16-02-1982 |
| | | JP | S6324122 B2 | 19-05-1988 |
| | | MX | 151568 A | 14-12-1984 |
| | | US | 4280060 A | 21-07-1981 |
| US 2008174122 A1 | 24-07-2008 | CN | 101222199 A | 16-07-2008 |
| | | JP | 5148117 B2 | 20-02-2013 |
| | | JP | 2008172953 A | 24-07-2008 |
| | | KR | 20080066597 A | 16-07-2008 |
| | | US | 2008174122 A1 | 24-07-2008 |
| EP 2642084 A1 | 25-09-2013 | CN | 103321695 A | 25-09-2013 |
| | | EP | 2642084 A1 | 25-09-2013 |
| | | JP | 2013194743 A | 30-09-2013 |
| | | US | 2013247569 A1 | 26-09-2013 |

EPO FORM P0461

Für nähere Einzelheiten zu diesem Anhang : siehe Amtsblatt des Europäischen Patentamts, Nr.12/82